# EUROPÄISCHE PATENTANMELDUNG

(11) **EP 1 557 730 A1**
(43) Veröffentlichungstag der Anmeldung: **27.07.2005**
(21) Anmeldenummer: 04029405.0
(22) Anmeldetag: 11.12.2004
(51) Int. Cl.: G05D 1/02

(54) **Bodenbearbeitungsgerät sowie Verfahren zu dessen Steuerung**

(30) Priorität: 22.01.2004 DE 102004004505
(71) Anmelder: Alfred Kärcher GmbH & Co. KG, 71364 Winnenden (DE)
(72) Erfinder: Dünne, Markus, 70599 Stuttgart-Plieningen (DE); Mayer, Harald, 71397 Leutenbach (DE); Nourani-Vatani, Navid, 2820 Gentofte (DK)
(74) Vertreter: Karrais, Martin

(57) **Zusammenfassung**

Die Erfindung betrifft ein Verfahren zur Steuerung der Bewegung eines mobilen Bodenbearbeitungsgerätes, das selbstfahrend und selbstlenkend ausgestaltet ist und eine Bodenbearbeitungseinheit, eine Antriebseinheit und eine Steuereinheit aufweist, wobei der Steuereinheit zumindest ein Fühler zugeordnet ist zum Erkennen von Hindernissen. Um das Verfahren derart weiterzubilden, daß eine vollständige Flächendeckung mit verhältnismäßig geringem Aufwand an Sensoren und an Rechenkapazität erzielt werden kann, wird erfindungsgemäß vorgeschlagen, daß man das Bodenbearbeitungsgerät mit Sensoren zum Erfassen von der Außenkontur der zu bearbeitenden Bodenfläche ausstattet und die Aubenkontur der Bodenfläche erfaßt, sie dann einzelne Teilsegmente (70) unterteilt und diese nacheinander anhand eines vorgegebenen Fortbewegungsmusters bearbeitet, wobei man nach der Bearbeitung von einem oder von mehreren Teilsegmenten die Lage des Bodenbearbeitungsgerätes anhand von einem oder von mehreren Referenzpunkten ermittelt, die man aus den Sensordaten der die Außenkontur erfassenden Sensoren bestimmt. Außerdem wird ein Bodenbearbeitungsgerät zur Durchführung des Verfahrens vorgeschlagen.

## Beschreibung

Die Erfindung betrifft ein Verfahren zur Steuerung der Bewegung eines mobilen Bodenbearbeitungsgerätes, wobei das Bodenbearbeitungsgerät selbstfahrend und selbstlenkend ausgestaltet ist und eine Bodenbearbeitungseinheit, eine Antriebseinheit und eine Steuereinheit zum Steuern der Bewegung des Bodenbearbeitungsgerätes aufweist, wobei der Steuereinheit zumindest ein Fühler zugeordnet ist zum Erkennen von Hindernissen und wobei der Steuereinheit zumindest ein Fortbewegungsmuster zum Befahren der zu bearbeitenden Bodenfläche vorgebbar ist.

Die Erfindung betrifft außerdem ein selbstfahrendes und selbststeuerndes Bodenbearbeitungsgerät zur Durchführung des Verfahrens, mit einer Bodenbearbeitungseinheit, einer Antriebseinheit und einer Steuereinheit zum Steuern der Bewegung des Bodenbearbeitungsgerätes, wobei der Steuereinheit zumindest ein Fühler zugeordnet ist zum Erkennen von Hindernissen und wobei der Steuereinheit zumindest ein Fortbewegungsmuster zum Befahren der zu bearbeitenden Bodenfläche vorgebbar ist.

Selbstfahrende und selbststeuernde Bodenbearbeitungsgeräte ermöglichen die Bearbeitung, beispielsweise die Reinigung, einer Bodenfläche ohne den Einsatz einer Bedienungsperson. Das Bodenbearbeitungsgerät wird entlang der zu bearbeitenden Bodenfläche verfahren. Hierzu kann der Steuereinheit ein Fortbewegungsmuster, d. h. ein Fahrtrichtungsverlauf, vorgegeben werden, so daß das Bodenbearbeitungsgerät selbsttätig diesem Fortbewegungsmuster folgt, um die zu bearbeitende Bodenfläche möglichst flächendeckend zu befahren. Der Fahrtrichtungsverlauf kann beispielsweise dem Zufallsprinzip folgen, indem das Bodenbearbeitungsgerät nach dem Auftreffen auf ein Hindernis seine Fahrtrichtung um einen zufälligen Winkel ändert und die so gewählte Fahrtrichtung dann solange beibehält, bis es erneut auf ein Hindernis, beispielsweise auf eine die Bodenfläche begrenzende Wand auftrifft. Es kann auch vorgesehen sein, daß ein zufälliger Fahrtrichtungsverlauf mit einem vorgegebenen Grundmuster, beispielsweise einer Spirale, einem Mäander oder einer Schlangenlinie, kombiniert wird, wie dies in der DE 198 49 978 C2 beschrieben ist. In diesem Falle wird ein Teilsegment der zu bearbeitenden Bodenfläche entsprechend dem vorgegebenen Grundmuster befahren, und nach der vollständigen Überdeckung dieses Teilsegmentes kann dann das Bodenbearbeitungsgerät in eine nach dem Zufallsprinzip ausgewählte Richtung fahren, um nach Zurücklegung einer vorgegebenen Wegstrecke erneut dem Grundmuster zu folgen. Bei Einsatz derartiger Fortbewegungsmuster kann das Bodenbearbeitungsgerät kostengünstig hergestellt werden, da nur wenige Sensoren zum Einsatz kommen müssen. Allerdings ist die vollständige Bearbeitung der Bodenfläche zeitaufwendig, denn eine vollständige Flächendeckung wird aufgrund des zum Einsatz kommenden Zufallsprinzips nur asymptotisch erreicht.

In der EP 0 382 693 B1 wird vorgeschlagen, ein Teilsegment der zu bearbeitenden Bodenfläche anhand eines vorgegebenen Fahrtrichtungsverlaufs flächendeckend zu befahren und danach das Bodenbearbeitungsgerät in eine durch möglicherweise auftretende Hindernisse sowie das vorgegebene Grundmuster definierte Richtung zu verfahren, um dann erneut dem Grundmuster zu folgen. Eine derartige Fahrstrategie erfordert den Einsatz verbesserter Sensoren sowie einer nicht unbeträchtlichen Rechenkapazität für die Steuereinheit, und dennoch ist eine vollständige Flächendeckung nur mit beträchtlichem Zeitaufwand zu erzielen.

Um eine vollständige Flächendeckung innerhalb verhältnismäßig kurzer Zeit erzielen zu können, könnte der Steuereinheit eine an die Form der Bodenfläche und die darauf befindlichen Hindernisse speziell angepaßter Fahrtrichtungsverlauf vorgegeben werden. Dies würde allerdings einen ganz erheblichen sensorischen Aufwand erfordern, außerdem wäre es softwaretechnisch schwierig, alle Eventualitäten der möglichen Umgebungsgeometrie zu berücksichtigen.

Aufgabe der vorliegenden Erfindung ist es, ein Verfahren zur Steuerung der Bewegung eines mobilen Bodenbearbeitungsgerätes der eingangs genannten Art derart weiterzubilden, daß eine vollständige Flächendeckung mit verhältnismäßig geringem Aufwand an Senoren und an Rechenkapazität erzielt werden kann.

Diese Aufgabe wird bei einem Verfahren der eingangs genannten Art erfindungsgemäß dadurch gelöst, daß man das Bodenbearbeitungsgerät mit Sensoren zum Erfassen von der Außenkontur der zu bearbeitenden Bodenfläche ausstattet und die Außenkontur der Bodenfläche erfaßt, die Bodenfläche dann in einzelne Teilsegmente unterteilt und diese nacheinander anhand eines vorgegebenen Fortbewegungsmusters bearbeitet, wobei man nach der Bearbeitung von einem oder von mehreren Teilsegmenten die Lage des Bodenbearbeitungsgerätes anhand von einem oder von mehreren Referenzpunkten ermittelt, die man aus den Sensordaten der die Außenkontur erfassenden Sensoren bestimmt.

In die Erfindung fließt der Gedanke mit ein, daß einzelne Teilsegmente einer zu bearbeitenden Bodenfläche selbst mit einem geringen Aufwand an Sensoren flächendeckend gereinigt werden können. Die zu bearbeitende Bodenfläche wird daher in einzelne Teilsegmente unterteilt, wobei hierzu zunächst die Außenkontur der Bodenfläche erfaßt wird und dann eine Segmentierung vorgenommen wird. Dies gibt die Möglichkeit, eine verhältnismäßig kleine Bodenfläche in nur wenige Teilsegmente zu unterteilen, während eine große Bodenfläche in eine Vielzahl von Teilsegmente gegliedert wird, die nacheinander bearbeitet werden können. Das Befahren der einzelnen Teilsegmente erfolgt anhand eines vorgegebenen Fortbewegungsmusters. Beispielsweise kann das Bodenbearbeitungsgerät zur Bearbeitung eines Teilsegmentes mäanderförmig, schlangenlinienförmig, spiralförmig oder flächenförmig verfahren werden.

Um zu vermeiden, daß einzelne Teilsegmente mehrmals befahren werden, führt das Bodenbearbeitungsgerät nach dem Bearbeiten von einem oder mehreren Teilsegmenten eine Selbstreferenzierung oder Selbstlokalisation durch, indem es seine Lage anhand von Referenzpunkten ermittelt. Die Referenzpunkte werden aus den Sensordaten bestimmt, die von den die Außenkontur der Bodenfläche erfassenden Sensoren gewonnen werden. Anhand der durch Selbstreferenzierung gewonnenen Information über seine Lage kann dann das Bodenbearbeitungsgerät ein noch nicht bearbeitetes Teilsegment ansteuern und dieses anschließend bearbeiten, so daß letztlich innerhalb verhältnismäßig kurzer Zeit eine flächendeckende Bearbeitung der gesamten Bodenfläche erzielt wird, wobei das mehrmalige Bearbeiten einzelner Teilsegmente vermieden werden kann.

Die einzelnen Teilsegmente werden möglichst flächendeckend befahren, wobei innerhalb eines Teilsegmentes auftretende Hindernisse, beispielsweise Möbelstücke, unter Einsatz des Hinderniserkennungsfühlers umfahren werden.

Vorzugsweise unterteilt man die Bodenfläche in einander überlappende Teilsegmente. Dadurch kann auf konstruktiv einfache Weise sichergestellt werden, daß zwischen einzelnen bearbeiteten Teilsegmenten keine unbearbeiteten Flächenbereiche verbleiben.

Bei einer besonders bevorzugten Ausführungsform des erfindungsgemäßen Verfahrens paßt man die Form der Teilsegmente an die Außenkontur der Bodenfläche an. Dadurch kann die Anzahl der zu bearbeitenden Teilsegmente verringert werden. Beispielsweise können für eine rechteckige Bodenfläche auch rechteckige Teilsegmente zum Einsatz kommen.

Günstig ist es, wenn man die Form der Teilsegmente an ein vorgegebenes Fortbewegungsmuster anpaßt. Hierbei ist es vorteilhaft, wenn man der Steuereinheit mehrere Fortbewegungsmuster vorgibt, die alternativ zum Befahren eines Teilsegmentes zum Einsatz kommen können. Dies gibt die Möglichkeit, die Teilsegmente sowohl an die Außenkontur der Bodenfläche als auch an ein vorgegebenes Fortbewegungsmuster anzupassen. Beispielsweise können rechteckige Teilsegmente bei einer rechteckigen Bodenfläche gewählt werden, wobei die einzelnen Teilsegmente dann schlangenlinienförmig befahren werden.

Als besonders günstig haben sich wabenförmige Teilsegmente, insbesondere sechseckförmige Teilsegmente, vor allem regelmäßige Sechsecke herausgestellt, da diese vom Bodenbearbeitungsgerät spiralförmig befahren werden, wobei innerhalb kurzer Zeit eine vollständige Flächendeckung erzielbar ist.

Um auf konstruktiv einfache Weise eine möglichst flächendeckende Bearbeitung der einzelnen Teilsegmente zu erzielen, ist es von Vorteil, wenn man zum Befahren eines Teilsegmentes die innerhalb des Teilsegmentes zurückgelegte Wegstrecke sowie die durchgeführten Richtungsänderungen erfaßt und zur Navigation des Bodenbearbeitungsgerätes innerhalb des Teilsegmentes heranzieht. Die Ortsbestimmung des selbstfahrenden und selbststeuernden Bodenbearbeitungsgerätes erfolgt somit innerhalb eines Teilsegmentes odometrisch, indem man die Position und die Fahrtrichtung des Bodenbearbeitungsgerätes aufgrund der gemessenen zurückgelegten Wegstrecke und der vorgenommenen Fahrtrichtungsänderungen bestimmt. Hierzu kann vorgesehen sein, daß den Antriebsrädern des Bodenbearbeitungsgerätes jeweils ein Encoder zugeordnet ist, mit dessen Hilfe die Anzahl der Umdrehungen der Antriebsräder bestimmt und daraus die zurückgelegte Wegstrecke berechnet werden kann. Eine derartige odometrische Selbstlokalisierung des Bodenbearbeitungsgerätes ist grundsätzlich mit einem Fehler behaftet aufgrund des unterschiedlichen Schlupfes der Antriebsräder. Beim erfindungsgemäßen Verfahren können allerdings die Teilsegmente so klein gewählt werden, daß bereits durch odometrische Messungen sichergestellt werden kann, daß eine flächendeckende und effiziente Bearbeitung erfolgt. Nach der Bearbeitung von einem oder mehreren Teilsegmenten wird dann eine von den odometrischen Daten unabhängige Selbstlokalisierung durchgeführt.

Die Bestimmung der Außenkontur der zu bearbeitenden Bodenfläche kann auf vielfältige Weise durchgeführt werden, beispielsweise mit Hilfe einer Kamera zum Erstellen einer Karte oder auch mittels eines Laserstrahles, der vom Bodenreinigungsgerät ausgesandt und von den die Bodenfläche begrenzenden Wänden reflektiert wird. Der Laserstrahl wird fächerförmig über die gesamte zu bearbeitende Bodenfläche ausgesandt, so daß anhand der jeweils ermittelten Entfernungen die Außenkontur der Bodenfläche erfaßt werden kann.

Alternativ kann die Außenkontur der Bodenfläche beispielsweise mittels Radar oder mittels Ultraschallsensoren bestimmt werden.

Bei einer besonders bevorzugten Ausführungsform des erfindungsgemäßen Verfahrens verfährt man das Bodenbearbeitungsgerät zur Bestimmung der Außenkontur der Bodenfläche an den die Bodenfläche begrenzenden Wänden entlang, wobei man während der Fahrt mittels der Sensoren gewonnene Sensordaten, die mit der Außenkontur der Bodenfläche korrelieren, wegund/oder zeitabhängig in einem Speicher abspeichert. Die gewonnenen Sensordaten werden somit unter Zuordnung der während der Wandverfolgungsfahrt zurückgelegten Wegstrecke und/oder der entsprechenden Fahrtzeit abgespeichert. So kann beispielsweise vorgesehen sein, daß man während der Wandverfolgungsfahrt die zurückgelegte Wegstrecke und die durchgeführten Richtungsänderungen erfaßt und in einem Speicher abspeichert. Das Bodenbearbeitungsgerät führt somit zu Beginn der Bearbeitung einer Bodenfläche zunächst eine Fahrt entlang der die Fläche begrenzenden Wänden aus, und beispielsweise aufgrund der erfaßten Wegstrecke und der durchgeführten Richtungsänderungen kann die Kontur auf einfache Weise bestimmt werden.

Als Sensordaten, die während der Wandverfolgungsfahrt gewonnen werden können und die mit der Außenkontur der Bodenfläche korrelieren, eignen sich beispielsweise auch Abstandsdaten, die von einem den Abstand des Bodenbearbeitungsgerätes zu der jeweiligen Wand erfassenden Sensor bereitgestellt und zeitabhängig abgespeichert werden. Das Bodenbearbeitungsgerät kann hierbei in möglichst gleichbleibendem Abstand entlang der die Bodenfläche begrenzenden Wände verfahren werden, und die beispielsweise in Intervallen von etwa 50 ms bis ca. 500 ms erfaßten Abstandsdaten können zeitabhängig, d. h. unter Zuordnung der jeweiligen Fahrtzeit, abgespeichert werden. Aus den so gewonnenen Abstandsdaten kann dann auf einfache Weise die Außenkontur der Bodenfläche bestimmt werden.

Eine Wandverfolgungsfahrt zu Beginn der Bearbeitung einer Bodenfläche hat auch den Vorteil, daß man aus den während der Fahrt des Bodenbearbeitungsgerätes entlang der die Bodenfläche begrenzenden Wänden gewonnenen Sensordaten zur Bestimmung von Referenzpunkten einzelne oder mehrere Sensordaten extrahieren kann. Die Referenzpunkte können dann nach der Bearbeitung einer oder mehrerer Teilsegmente zur Selbstlokalisierung des Bodenbearbeitungsgerätes eingesetzt werden. Derartige Referenzpunkte bilden natürliche Landmarken, die von der Außenkontur der Bodenfläche vorgegeben sind und die Selbstlokalisierung des Bodenbearbeitungsgerätes ermöglichen.

Wie bereits erläutert, stellen beispielsweise die während einer Wandverfolgungsfahrt durchgeführten Richtungsänderungen Sensordaten dar, die mit der Außenkontur der Bodenfläche korrelieren. Bei einer besonders bevorzugten Ausführungsform des erfindungsgemäßen Verfahrens extrahiert man zur Bestimmung von Referenzpunkten einzelne oder mehrere der durchgeführten Richtungsänderungen des Bodenbearbeitungsgerätes während seiner Fahrt entlang der die Bodenfläche begrenzenden Wände. Die Richtungsänderungen können hierbei mittels den Antriebsrädern des Bodenbearbeitungsgerätes zugeordneten Encoder auf konstruktiv einfache Weise erfaßt werden, denn bei einer Richtungsänderung führen die Antriebsräder einer unterschiedliche Anzahl von Umdrehungen durch, so daß aufgrund der unterschiedlichen Umdrehungszahl mit sehr geringem softwaremäßigem Aufwand eine Richtungsänderung des Bodenbearbeitungsgerätes erfaßt werden kann, d. h. es kann der Winkel berechnet werden, um den sich die Fahrtrichtung ändert.

Zur Bestimmung von Referenzpunkten kann auch vorgesehen sein, daß man einzelne oder mehrere Abstandsdaten, die während der anfänglichen Wandverfolgungsfahrt gewonnen wurden, extrahiert und als natürliche Landmarken einsetzt. Diese können dann mit zu einem späteren Zeitpunkt bei einer erneuten Wandverfolgungsfahrt gewonnenen Abstandsdaten verglichen werden zur Selbstlokalisierung des Bodenbearbeitungsgerätes.

Wie bereits erläutert, ermöglicht es die Bestimmung der Referenzpunkte, nach der Bearbeitung von einem oder mehreren Teilsegmenten eine Selbstlokalisierung des Bodenbearbeitungsgerätes durchzuführen. Hierbei ist es günstig, wenn man nach der Bearbeitung von einem oder mehreren Teilsegmenten das Bodenbearbeitungsgerät erneut entlang von einer oder mehreren die Bodenfläche begrenzenden Wänden verfährt und die Lage des Bodenbearbeitungsgerätes aus dem Vergleich von während der anfänglichen Wandverfolgungsfahrt gewonnenen Sensordaten mit nach der Bearbeitung von mindestens einem Teilsegment gewonnenen Sensordaten bestimmt. Aufgrund der somit gewonnenen Lageinformation kann dann vom Bodenbearbeitungsgerät ein noch nicht bearbeitetes Teilsegment angesteuert und dieses anschließend bearbeitet werden.

Das erfindungsgemäße Verfahren eignet sich insbesondere zur Steuerung eines Bodenreinigungsgerätes.

Aufgabe der vorliegenden Erfindung ist es auch, ein selbstfahrendes und selbststeuerndes Bodenbearbeitungsgerät der eingangs genannten Art zur Durchführung des Verfahrens bereitzustellen.

Diese Aufgabe wird bei einem Bodenbearbeitungsgerät der gattungsgemäßen Art erfindungsgemäß dadurch gelöst, daß das Bodenbearbeitungsgerät Sensoren zum Erfassen der Außenkontur der Bodenfläche aufweist, daß mittels der Steuereinheit die Bodenfläche in Teilsegmente segmentierbar und die Teilsegmente nacheinander anhand eines vorgegebenen Fortbewegungsmusters befahrbar und bearbeitbar sind, und daß das Bodenbearbeitungsgerät ein Lokalisierungsglied umfaßt zum Bestimmen der Lage des Bodenbearbeitungsgerätes anhand von einem oder mehreren Referenzpunkten, die aus den Sensordaten der die Außenkontur erfassenden Sensoren bestimmbar sind.

Eine derartige Ausgestaltung des Bodenbearbeitungsgerätes ermöglicht eine Segmentierung der zu bearbeitenden Bodenfläche und eine Selbstlokalisierung des Bodenbearbeitungsgerätes, wobei zur Lokalisierung sensorisch erfaßte Referenzpunkte, d. h. natürliche Landmarken, der Außenkontur der Bodenfläche herangezogen werden können.

Günstig ist es, wenn die Steuereinheit ein Speicherglied zum Abspeichern mehrerer Fortbewegungsmuster umfaßt, wobei in Abhängigkeit von der erfaßten Außenkontur der Bodenfläche und/oder der Form der Teilsegmente ein bestimmtes Fortbewegungsmuster selbsttätig auswählbar ist. Mittels der Steuereinheit kann die Bodenfläche in Teilsegmente segmentiert werden, wobei die Segmentierung in Abhängigkeit von der erfaßten Außenkontur der Bodenfläche vorgenommen werden kann. Die einzelnen Teilsegmente können dann mit vorgegebenem Fahrtrichtungsverlauf flächendeckend bearbeitet werden. Hierzu können im Speicherglied mehrere Fortbewegungsmuster, beispielsweise spiralförmige, mäanderförmige, schlangenlinienförmige und fächerförmige Fortbewegungsmuster vorgegeben werden, und in Anpassung an die Außenkontur der Bodenfläche und/oder die Form der Teilsegmente kann mittels der Steuereinheit selbsttätig ein Fortbewegungsmuster ausgewählt werden, mit dessen Hilfe die Teilsegmente innerhalb möglichst kurzer Zeit flächendeckend bearbeitet werden können.

Vorzugsweise umfaßt das Bodenbearbeitungsgerät zum Erfassen der Außenkontur der Bodenfläche zumindest einen berührungslosen Abstandssensor zur Ermittlung eines Abstandes, den das Bodenbearbeitungsgerät zu die Bodenfläche begrenzenden Wänden einnimmt. Mittels des Abstandssensors können während einer anfänglichen Wandverfolgungsfahrt in gleichmäßigen zeitlichen Abständen, beispielsweise in Abständen von 100 ms, Abstandsdaten gewonnen werden, die eine Außenkonturbestimmung ermöglichen sowie auch die Bestimmung von Referenzpunkten, indem aus den gewonnenen Abstandsdaten eine Sequenz extrahiert wird, die mit zu einem späteren Zeitpunkt gewonnenen Abstandsdaten verglichen werden.

Von Vorteil ist es, wenn das Bodenbearbeitungsgerät jeweils einem Antriebsrad zugeordnete Encoder zur Ermittlung der Anzahl der Umdrehungen der Antriebsräder aufweist. Mittels des Abstandssensors kann auf konstruktiv einfache Weise eine Wandverfolgungsfahrt durchgeführt werden, und mittels der Encoder können die zurückgelegte Wegstrecke sowie Form und Anzahl der durchgeführten Fahrtrichtungsänderungen auf konstruktiv einfache Weise erfaßt werden. Damit kann nicht nur die Kontur der Bodenfläche bestimmt werden, sondern es können aufgrund der durchgeführten Fahrtrichtungsänderungen auch Referenzpunkte bestimmt werden.

Der Abstandssensor umfaßt vorzugsweise einen Infrarotsender sowie einen Infrarotempfänger. Alternativ und/oder ergänzend können eine Radareinheit, ein Ultraschallsensor oder auch ein Lasersensor vorgesehen sein.

Die Lage des Bodenbearbeitungsgerätes ist bei einer bevorzugten Ausführungsform mittels des Lokalisierungsgliedes aus dem Vergleich von während einer anfänglichen Wandverfolgungsfahrt gewonnenen Sensordaten mit nach der Bearbeitung von mindestens einem Teilsegment gewonnenen Sensordaten bestimmbar. Dies gibt die Möglichkeit, nach der Bearbeitung von einem oder mehreren Teilsegmenten das Bodenbearbeitungsgerät in Richtung auf eine die Bodenfläche begrenzende Wand zu verfahren und anschließend eine erneute Wandverfolgungsfahrt durchzuführen, um aus dem Vergleich der gewonnenen Sensordaten die Lage des Bodenbearbeitungsgerätes zu bestimmen.

Das Bodenbearbeitungsgerät ist vorzugsweise als mobiles Bodenreinigungsgerät ausgestattet. Hierzu kann die Bodenbearbeitungseinheit eine Saugeinheit und/oder eine Kehreinheit umfassen zum Absaugen und/oder Kehren der Bodenfläche. Alternativ und/oder ergänzend können eine Wisch- oder Schrubbeinheit vorgesehen sein. Zum Wischen kann ein elektrostatisch aufladbares Wischelement zum Einsatz kommen, beispielsweise ein aufladbares Wischtuch.

Die nachfolgende Beschreibung einer bevorzugten Ausführungsform der Erfindung dient im Zusammenhang mit der Zeichnung der näheren Erläuterung. Es zeigen:
- Figur 1:: eine schematische Seitenansicht eines erfindungsgemäßen Bodenbearbeitungsgerätes;
- Figur 2:: ein Blockdiagramm des Steuersystems des Bodenbearbeitungsgerätes;
- Figur 3:: eine Veranschaulichung des Fahrtrichtungsverlaufes des Bodenbearbeitungsgerätes zu Beginn der Bearbeitung einer Bodenfläche und
- Figur 4:: eine Veranschaulichung des Fahrtrichtungsverlaufes des Bodenbearbeitungsgerätes zur flächendeckenden Bearbeitung einer Bodenfläche.

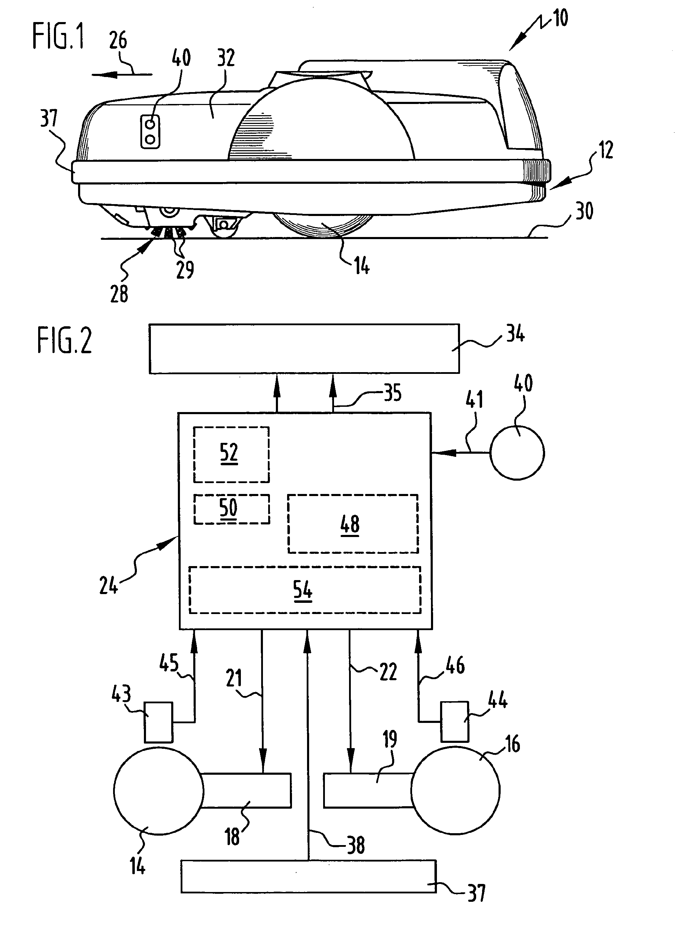

In den Figuren 1 und 2 ist schematisch ein erfindungsgemäßes Bodenbearbeitungsgerät in Form eines insgesamt mit dem Bezugszeichen 10 belegten Bodenreinigungsgerätes dargestellt. Das Bodenreinigungsgerät 10 ist selbstfahrend und selbststeuernd ausgestaltet und ermöglicht die autonome Reinigung einer Bodenfläche. Es umfaßt ein Fahrwerk 12, an dem um eine gemeinsame Drehachse drehbar zwei Antriebsräder 14, 16 gelagert sind, denen jeweils ein Antriebsmotor 18 bzw. 19 zugeordnet ist. Die Antriebsmotoren 18, 19 sind am Fahrwerk 12 gehalten und stehen über Steuerleitungen 21 bzw. 22 mit einer Steuereinheit 24 sowie mit an sich bekannten, in der Zeichnung nicht dargestellten elektrischen Batterien in elektrischer Verbindung. Die Antriebsräder 14, 16 und die zugeordneten Antriebsmotoren 18 bzw. 19 bilden eine Antriebseinheit des Bodenreinigungsgerätes 10.

Unterseitig weist das Fahrwerk 12 eine Schmutzeintrittsöffnung auf, an der eine quer zur Hauptbewegungsrichtung 26 des Bodenreinigungsgerätes 10 ausgerichtete Bürstenwalze 28 mit einer Vielzahl von radial ausgerichteten Bürsten 29 drehbar gehalten ist. Mittels der Bürsten 29 kann von einer zu reinigenden Bodenfläche 30 Schmutz aufgenommen und in einen Schmutzsammelbehälter überführt werden, der von einem Deckel 32 des Bodenreinigungsgerätes 10 überdeckt ist. Der an sich bekannte und deshalb in der Zeichnung nicht dargestellte Schmutzbehälter steht mit einem dem Fachmann ebenfalls bekannten und daher in der Zeichnung nicht dargestellten Saugaggregat in Strömungsverbindung, mit dessen Hilfe im Bereich der der Bürstenwalze 28 benachbarten Schmutzeintrittsöffnung eine Saugströmung in Richtung auf den Schmutzbehälter erzeugt werden kann. Mittels der Saugströmung wird die Aufnahme von Schmutz von der Bodenfläche 30 unterstützt. Die Bürstenwalze 28 bildet in Kombination mit dem Saugaggregat eine in Figur 2 blockschaltartig dargestellte Bodenreinigungseinheit 34, die über Steuerleitungen 35 mit der Steuereinheit 24 gekoppelt ist.

Das Fahrwerk ist in Umfangsrichtung vollständig von einem Hinderniserkennungsfühler in Form eines Tastringes 37 umgeben, der in an sich bekannter und deshalb in der Zeichnung nicht dargestellter Weise mit mindestens einem Hallsensor gekoppelt und schwimmend gelagert ist. Mittels des zugeordneten Hallsensors kann eine Relativbewegung des Tastringes 37 bezogen auf das Fahrwerk 12 erkannt werden. Eine derartige Relativbewegung ergibt sich beim Auftreffen des Bodenreinigungsgerätes 10 auf ein Hindernis. Tritt eine derartige Relativbewegung auf, so wird ein Hinderniserkennungssignal generiert und über eine Signalleitung 38 an die Steuereinheit 24 übertragen. Aufgrund des Hinderniserkennungssignals kann von der Steuereinheit 24 zur Umgehung des Hindernisses eine Fahrtrichtungsänderung durchgeführt werden, indem die Antriebsmotoren 18, 19 zu einer Richtungsänderung angesteuert werden.

Seitlich ist am Deckel 32 ein Abstandssensor in Form einer Infrarotsende/Empfangseinheit 40 angeordnet, die über eine Signalleitung 41 mit der Steuereinheit 24 verbunden ist. Von der Infrarot-Sende/Empfangseinheit 40 wird der Steuereinheit 24 ein Abstandssignal bereitgestellt, so daß die Steuereinheit 24 das Bodenreinigungsgerät 10 zu einer Fahrt mit gleichbleibendem Abstand zu einem Hindernis, insbesondere zu einer die Bodenfläche 30 begrenzenden Wand, steuern kann.

Den Antriebsrädern 14, 16 ist jeweils ein Encoder 43 bzw. 44 zugeordnet, der die Umdrehungen des jeweiligen Antriebsrades 14 bzw. 16 erfaßt und der Steuereinheit 24 jeweils über eine Signalleitung 45 bzw. 46 ein Encoder-Signal bereitstellt. Die Steuereinheit 24 weist ein Rechenglied 48 auf, dem die Encodersignale zugeführt werden und das aus diesen die vom Bodenreinigungsgerät 10 zurückgelegte Wegstrecke sowie etwaige Richtungsänderungen ermittelt. Richtungsänderungen können hierbei aufgrund der unterschiedlichen Umdrehungszahlen der beiden Antriebsräder 14 und 16 auf einfache Weise erkannt werden. Auftretende Richtungsänderungen, d. h. der Winkel, um den sich die Fahrtrichtung jeweils ändert, und deren jeweilige Abstände zueinander können in einem ersten Speicherglied 50 der Steuereinheit 24 abgespeichert werden.

In einem zweiten Speicherglied 52 der Steuereinheit 24 können mehrere Fortbewegungsmuster gespeichert werden, die wahlweise zur Steuerung der Bewegung des Bodenreinigungsgerätes 10 herangezogen werden können. So können beispielsweise spiralförmige, mäanderförmige, schlangenlinienförmige und fächerförmige Fahrtrichtungsverläufe als Fortbewegungsmuster im Speicherglied 52 gespeichert werden. Wie nachfolgend erläutert, kommen derartige Fortbewegungsmuster zum Befahren eines Teilsegmentes der zu reinigenden Bodenfläche 30 zum Einsatz.

Die Steuereinheit 24 weist ein Lokalisierungsglied 54 auf, mit dessen Hilfe eine Selbstlokalisierung des Bodenreinigungsgerätes 10 durchgeführt werden kann. Das Lokalisierungsglied 54 steht hierbei mit dem ersten Speicherglied 50 in elektrischer Verbindung sowie mit dem Rechenglied 48. Wie nachfolgend noch näher erläutert wird, können bei einer Wandverfolgungsfahrt auftretende Richtungsänderungen mit im ersten Speicherglied 50 abgespeicherten Richtungsänderungen und deren jeweiligen Abständen verglichen werden. Die Abfolge derartiger Richtungsänderungen ermöglicht es dem Lokalisierungsglied 54, die Lage des Bodenbearbeitungsgerätes 10 zu erkennen.

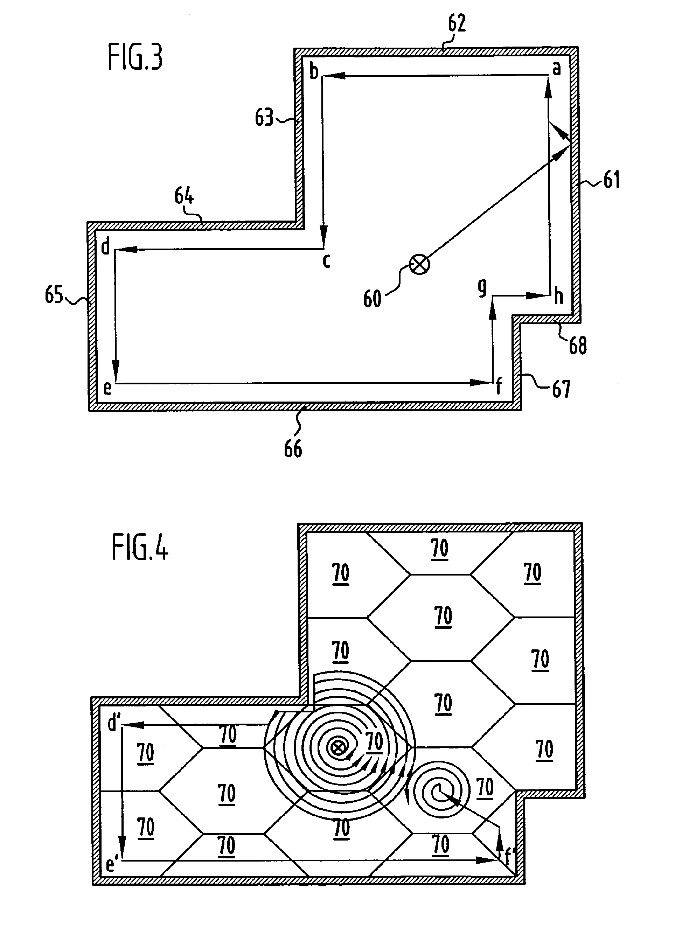

Während einer Reinigungsfahrt des Bodenreinigungsgerätes 10, wie sie in den Figuren 3 und 4 schematisch dargestellt ist, fährt das Bodenreinigungsgerät 10, ausgehend von einem beliebigen Startpunkt 60 zunächst in eine beliebige Richtung, bis es auf eine die Bodenfläche 30 begrenzende Wand 61 auftrifft. Anschließend fährt es in gleichbleibendem Abstand an den die Bodenfläche 30 begrenzenden Wänden entlang, im vorgegebenen Ausführungsbeispiel fährt es also an den Wänden 61 bis 68 entlang, die die Bodenfläche 30 in Umfangsrichtung begrenzen. Ausgehend von der Wand 61 fährt es zunächst in Richtung auf die Wand 62. Beim Auftreffen auf die Wand 61 führt das Bodenreinigungsgerät 30 eine erste Richtungsänderung a durch, fährt dann an der Wand 62 entlang bis es auf die Wand 63 trifft und dort eine zweite Richtungsänderung b durchführt, um in Höhe der Wand 64 eine weitere Richtungsänderung c durchzuführen. Es fährt anschließend an der Wand 64 entlang bis es auf die Wand 65 trifft und dort eine weitere Richtungsänderung d durchführt. Nach seiner Fahrt parallel zur Wand 65 trifft es auf die Wand 66, wobei es eine weitere Richtungsänderung e durchführt, und beim anschliessenden Auftreffen auf die Wand 67 führt es eine Richtungsänderung f durch, an der sich in Höhe der Wand 68 eine weitere Richtungsänderung g anschließt. Schließlich trifft das Bodenreinigungsgerät 10 erneut auf die Wand 61, wobei es eine Richtungsänderung h durchführt, um dann wieder parallel zur Wand 61 zu fahren, bis es wieder auf die Wand 62 auftrifft. Die jeweiligen Richtungsänderungen a bis h werden in Form der jeweiligen Winkel, um die sich die Fahrtrichtungen ändern, im ersten Speicherglied 50 abgespeichert zusammen mit den jeweiligen Abständen, die sich zwischen den jeweiligen Richtungsänderungen a bis h einstellen.

Die anfängliche Wandverfolgungsfahrt wird vom Bodenreinigungsgerät 10 solange durchgeführt, bis es nach dem vollständigen Umfahren der Bodenfläche 30 aufgrund der sich dann bei der weiteren Wandverfolgung wiederholenden Richtungsänderungen a, b und c erkennt, daß es die Bodenfläche 30 vollständig umfahren hat.

Aus den Informationen über die vorgenommenen Richtungsänderungen a bis h und den jeweiligen Abstandsinformationen wird anschließend vom Rechenglied 48 die Kontur der Bodenfläche 30 bestimmt. Daraufhin wird die Bodenfläche 30 wabenförmig segmentiert, wie dies in Figur 4 dargestellt ist, indem die Bodenfläche 30 in Teilsegmente 70 unterteilt wird, die die Bodenfläche 30 in ihrer Gesamtheit vollständig überdecken. Die Teilsegmente70 können sich hierbei gegenseitig überlappen, dies ist in Figur 4 zur Erzielung einer besseren Übersicht nicht dargestellt.

Nach Abschluß der anfänglichen Wandverfolgungsfahrt und nach der Bestimmung der Kontur der Bodenfläche 30 und deren Segmentierung wird vom Bodenreinigungsgerät 10 zunächst ein erstes Teilsegment 70 unter Heranziehung eines im zweiten Speicherglied 52 abgespeicherten vorgegebenen Fahrtrichtungsverlaufes befahren und flächendeckend gereinigt. Hierbei kann beispielsweise ein spiralförmiger Fahrtrichtungsverlauf zum Einsatz kommen, wie er aus Figur 4 ersichtlich ist. Gegebenenfalls auftretende Hindernisse werden umfahren, dies ist in Figur 4 zur Erzielung einer besseren Übersicht nicht dargestellt.

Innerhalb eines Teilsegmentes 70 erfolgt die Lokalisierung des Bodenreinigungsgerätes 10 mittels der Encoder 43 und 44, d. h. die Positionsbestimmung innerhalb eines Teilsegmentes 70 erfolgt odometrisch anhand der von den Antriebsrädern 14 und 16 zurückgelegten Wegstrecke und der auftretenden Richtungsänderungen. Diese Lokalisierung ist allerdings mit einem nicht unbeträchtlichen Fehler verbunden. Das Bodenreinigungsgerät 10 führt deshalb nach der flächendeckenden Reinigung eines ersten Teilsegmentes 70 erneut eine Wandverfolgungsfahrt durch, wie sie in Figur 4 dargestellt ist, wobei hierbei auftretenden Richtungsänderungen d', e', f vom Lokalisierungsglied 54 mit den bereits im ersten Speicherglied 50 abgespeicherten Richtungsänderungen verglichen werden. Hierbei erkennt das Lokalisierungsglied, daß die Richtungsänderungen d', e' und f' und deren jeweilige Abstände mit den entsprechenden Richtungsänderungen d, e und f bzw. deren Abstände identisch sind, die während der anfänglichen Wandverfolgungsfahrt erfaßt wurden. Aus der Abfolge der nach der Bearbeitung eines Teilsegmentes erfaßten Richtungsänderungen kann somit das Bodenreinigungsgerät 10 auf konstruktiv einfache Weise seine absolute Lage bestimmen, so daß anschließend ein noch nicht bearbeitetes Teilsegment 70 befahren und flächendeckend gereinigt werden kann. An die Reinigung des zweiten Teilsegmentes schließt sich dann erneut eine Selbstlokalisierung unter Zuhilfenahme der als Referenzpunkte dienenden, während der ersten Wandverfolgungsfahrt abgespeicherten Richtungsänderungen an. Auf diese Weise kann innerhalb verhältnismäßig kurzer Zeit die Bodenfläche 30 flächendeckend gereinigt werden, wobei eine mehrmalige Bearbeitung von Teilsegmenten vermieden wird.

## Patentansprüche

1. Verfahren zur Steuerung der Bewegung eines mobilen Bodenbearbeitungsgerätes, wobei das Bodenbearbeitungsgerät selbstfahrend und selbstlenkend ausgestaltet ist und eine Bodenbearbeitungseinheit, eine Antriebseinheit und eine Steuereinheit zum Steuern der Bewegung des Bodenbearbeitungsgerätes aufweist, wobei der Steuereinheit zumindest ein Fühler zugeordnet ist zum Erkennen von Hindernissen und wobei der Steuereinheit zumindest ein Fortbewegungsmuster zum Befahren der zu bearbeitenden Bodenfläche vorgebbar ist, **dadurch gekennzeichnet, daß** man das Bodenbearbeitungsgerät mit Sensoren zum Erfassen der Außenkontur der zu bearbeitenden Bodenfläche ausstattet und die Außenkontur der Bodenfläche erfaßt, die Bodenfläche dann in einzelne Teilsegmente unterteilt und diese nacheinander anhand eines vorgegebenen Fortbewegungsmusters bearbeitet, wobei man nach der Bearbeitung von einem oder von mehreren Teilsegmenten die Lage des Bodenbearbeitungsgerätes anhand von einem oder mehreren Referenzpunkten ermittelt, die man aus den Sensordaten der die Außenkontur erfassenden Sensoren bestimmt.

2. Verfahren nach Anspruch 1, **dadurch gekennzeichnet, daß** man die Bodenfläche in einander überlappende Teilsegmente unterteilt.

3. Verfahren nach Anspruch 1 oder 2, **dadurch gekennzeichnet, daß** man die Form der Teilsegmente an die Außenkontur der Bodenfläche anpaßt.

4. Verfahren nach Anspruch 1, 2 oder 3, **dadurch gekennzeichnet, daß** man die Form der Teilsegmente an ein vorgegebenes Fortbewegungsmuster anpaßt.

5. Verfahren nach einem der voranstehenden Ansprüche, **dadurch gekennzeichnet, daß** man die Bodenfläche in wabenförmige Teilsegmente unterteilt.

6. Verfahren nach einem der voranstehenden Ansprüche, **dadurch gekennzeichnet, daß** man zum Befahren eines Teilsegmentes die innerhalb des Teilsegmentes zurückgelegte Wegstrecke sowie die durchgeführten Richtungsänderungen erfaßt und zur Navigation des Bodenbearbeitungsgerätes innerhalb des Teilsegmentes heranzieht.

7. Verfahren nach einem der voranstehenden Ansprüche, **dadurch gekennzeichnet, daß** man das Bodenbearbeitungsgerät zur Bestimmung der Außenkontur der Bodenfläche an den die Bodenfläche begrenzenden Wänden entlang fährt und während der Fahrt mittels der Sensoren gewonnene Sensordaten, die mit der Außenkontur der Bodenfläche korrelieren, weg- und/oder zeitabhängig in einem Speicherglied abspeichert.

8. Verfahren nach Anspruch 7, **dadurch gekennzeichnet, daß** man während der Fahrt an den die Bodenfläche begrenzenden Wänden entlang die zurückgelegte Wegstrecke und die durchgeführten Richtungsänderungen abspeichert.

9. Verfahren nach Anspruch 7 oder 8, **dadurch gekennzeichnet, daß** man während der Fahrt an den die Bodenfläche begrenzenden Wänden entlang den Abstand des Bodenbearbeitungsgerätes zu der jeweiligen Wand erfaßt und die so gewonnenen Abstandsdaten zeitabhängig abspeichert.

10. Verfahren nach Anspruch 7, 8 oder 9, **dadurch gekennzeichnet, daß** man zur Bestimmung von Referenzpunkten der Außenkontur der Bodenfläche aus den während der Fahrt des Bodenbearbeitungsgerätes entlang der die Bodenfläche begrenzenden Wände gewonnenen Sensordaten einzelne oder mehrere Sensordaten extrahiert.

11. Verfahren nach Anspruch 10, **dadurch gekennzeichnet, daß** man zur Bestimmung von Referenzpunkten durchgeführte Richtungsänderungen des Bodenbearbeitungsgerätes extrahiert.

12. Verfahren nach Anspruch 10 oder 11, daß man zur Bestimmung von Referenzpunkten einzelne oder mehrere Abstandsdaten extrahiert, die von einem den Abstand des Bodenbearbeitungsgerätes erfassenden Sensor bereitgestellt werden.

13. Verfahren nach einem der voranstehenden Ansprüche, **dadurch gekennzeichnet, daß** man nach der Bearbeitung von einem oder von mehreren Teilsegmenten das Bodenbearbeitungsgerät erneut entlang von einer oder von mehreren die Bodenfläche begrenzenden Wänden verfährt und die Lage des Bodenbearbeitungsgerätes aus dem Vergleich von während einer anfänglichen Wandverfolgungsfahrt gewonnenen Sensordaten mit nach der Bearbeitung von mindestens einem Teilsegment gewonnenen Sensordaten bestimmt.

14. Selbstfahrendes und selbststeuerndes Bodenbearbeitungsgerät zur Durchführung des Verfahrens nach einem der voranstehenden Ansprüche, mit einer Bodenbearbeitungseinheit, einer Antriebseinheit und einer Steuereinheit zum Steuern der Bewegung des Bodenbearbeitungsgerätes, wobei der Steuereinheit zumindest ein Fühler zugeordnet ist zum Erkennen von Hindernissen und wobei der Steuereinheit zumindest ein Fortbewegungsmuster zum Befahren der zu bearbeitenden Bodenfläche vorgebbar ist, **dadurch gekennzeichnet, daß** das Bodenbearbeitungsgerät (10) Sensoren (43, 44) zum Erfassen der Außenkontur der Bodenfläche (30) aufweist, daß mittels der Steuereinheit (24) die Bodenfläche (30) in Teilsegmente (70) segmentierbar und die Teilsegmente (70) nacheinander anhand eines vorgegebenen Fortbewegungsmusters befahrbar und bearbeitbar sind, und daß das Bodenbearbeitungsgerät (10) ein Lokalisierungsglied (54) umfaßt zum Bestimmen der Lage des Bodenbearbeitungsgerätes (10) anhand von einem oder mehreren Referenzpunkten (d, e, f), die aus den Sensordaten der die Außenkontur erfassenden Sensoren (43, 44) bestimmbar sind.

15. Bodenbearbeitungsgerät nach Anspruch 14, **dadurch gekennzeichnet, daß** die Steuereinheit (24) ein Speicherglied (52) zum Abspeichern mehrerer Fortbewegungsmuster umfaßt, wobei in Abhängigkeit von der erfaßten Außenkontur der Bodenfläche (30) und/oder der Form der Teilsegmente (70) ein bestimmtes Fortbewegungsmuster selbsttätig auswählbar ist.

16. Bodenbearbeitungsgerät nach Anspruch 14 oder 15, **dadurch gekennzeichnet, daß** das Bodenbearbeitungsgerät (10) zum Erfassen der Außenkontur der Bodenfläche (30) zumindest einen berührungslosen Abstandssensor (40) umfaßt zur Ermittlung eines Abstandes, den das Bodenbearbeitungsgerät (10) zu die Bodenfläche begrenzenden Wänden (61 bis 68) einnimmt.

17. Bodenbearbeitungsgerät nach Anspruch 16, **dadurch gekennzeichnet, daß** das Bodenbearbeitungsgerät (10) jeweils einem Antriebsrad (14, 16) zugeordnete Encoder (43, 44) zur Ermittlung der Anzahl der Umdrehungen der Antriebsräder (14, 16) aufweist.

18. Bodenbearbeitungsgerät nach Anspruch 16 oder 17, **dadurch gekennzeichnet, daß** der Abstandssensor (40) einen Infrarotsensor und einen Infrarotempfänger umfaßt.

19. Bodenbearbeitungsgerät nach Anspruch 16, 17 oder 18, **dadurch gekennzeichnet, daß** der Abstandssensor eine Radareinheit, einen Ultraschallsensor und/oder einen Lasersensor umfaßt.

20. Bodenbearbeitungsgerät nach einem der Ansprüche 14 bis 19, **dadurch gekennzeichnet, daß** die Lage des Bodenbearbeitungsgerätes (10) mittels des Lokalisierungsgliedes (54) aus dem Vergleich von während einer anfänglichen Wandverfolgungsfahrt gewonnenen Sensordaten mit nach der Bearbeitung von zumindest einem Teilsegment (70) gewonnenen Sensordaten bestimmbar ist.

21. Bodenbearbeitungsgerät nach einem der Ansprüche 14 bis 20, **dadurch gekennzeichnet, daß** das Bodenbearbeitungsgerät als mobiles Bodenreinigungsgerät (10) ausgebildet ist.
